# EUROPÄISCHE PATENTSCHRIFT

(11) **EP 3 313 938 B1**
(45) Veröffentlichungstag und Bekanntmachung des Hinweises auf die Patenterteilung: **07.08.2019**
(21) Anmeldenummer: 16728939.6
(22) Anmeldetag: 13.06.2016
(51) Int. Cl.: C08L 77/00, C08K 5/19, C08K 5/22, C08K 5/3415

(54) **POLYMERZUSAMMENSETZUNG MIT VERZÖGERTEM KRISTALLISATIONSVERHALTEN, DAS KRISTALLISATIONSVERHALTEN BEEINFLUSSENDE ADDITIVZUSAMMENSETZUNG, VERFAHREN ZUR HERABSETZUNG DES KRISTALLISATIONSPUNKTES SOWIE VERWENDUNG EINER ADDITIVZUSAMMENSETZUNG**
POLYMER COMPOSITION HAVING DELAYED CRYSTALLIZATION BEHAVIOR, ADDITIVE COMPOSITION THAT INFLUENCES THE CRYSTALLIZATION BEHAVIOR, METHOD FOR LOWERING THE CRYSTALLIZATION POINT, AND USE OF AN ADDITIVE COMPOSITION
COMPOSITION POLYMÈRE À COMPORTEMENT DE CRISTALLISATION RETARDÉ, COMPOSITION ADDITIVE INFLUANT SUR LE COMPORTEMENT DE CRISTALLISATION, PROCÉDÉ D'ABAISSEMENT DU POINT DE CRISTALLISATION, ET UTILISATION D'UNE COMPOSITION ADDITIVE

(30) Priorität: 23.06.2015 DE 102015211632
(43) Veröffentlichungstag der Anmeldung: 02.05.2018
(73) Patentinhaber: Fraunhofer-Gesellschaft zur Förderung der angewandten Forschung e.V., 80686 München (DE)
(72) Erfinder: GROOS, Benjamin, 22111 Hamburg (DE); PFAENDNER, Rudolf, 64668 Rimbach (DE)
(74) Vertreter: Pfenning, Meinig & Partner mbB
(86) Internationale Anmeldenummer: PCT/EP2016/063428
(87) Internationale Veröffentlichungsnummer: WO 2016/207003

(56) Entgegenhaltungen:
- DE-A1- 10 243 181
- K. SUKATA ET AL.: "Influence of the nigrosine dye on the thermal behavior of polyamide 66", JOURNAL OF APPLIED POLYMER SCIENCE, Bd. 101, Nr. 5, 5. September 2006 (2006-09-05), Seiten 3270-3274, XP002761295, DOI: 10.1002/app.23715 in der Anmeldung erwähnt
- S. K. CHAURASIA ET AL.: "Dielectric relaxation and conductivity studies on (PEO:LiClO4) polymer electrolyte with added ionic liquid [BMIM][PF6]: Evidence of ion-ion interaction", JOURNAL OF POLYMER SCIENCE PART B: POLYMER PHYSICS, Bd. 49, Nr. 4, 15. Februar 2011 (2011-02-15), Seiten 291-300, XP002761296, DOI: 10.1002/polb.22182 in der Anmeldung erwähnt

## Beschreibung

Die vorliegende Erfindung betrifft eine Polymerzusammensetzung, die eine Matrix aus mindestens einem kristallisationsfähigen thermoplastischen Polymeren, sowie hierin eingearbeitet mindestens einen Azinfarbstoff und mindestens eine ionische Flüssigkeit beinhaltet oder hieraus besteht. Diese Polymerzusammensetzung zeichnet sich dadurch aus, dass ihr Kristallisationspunkt gegenüber nicht-additivierten Polymerzusammensetzungen merklich verringert ist. Zusätzlich betrifft die vorliegende Erfindung eine entsprechende Additivzusammensetzung zur Kristallisation und/oder zur Erniedrigung des Kristallisationspunktes von kristallisationsfähigen thermoplastischen Polymeren oder Polymerzusammensetzungen.

Die Erfindung betrifft außerdem ein Verfahren zur Beeinflussung des Kristallisationsverhaltens von kristallisationsfähigen thermoplastischen Polymeren bzw. Polymerzusammensetzungen, bei dem ein Azinfarbstoff sowie eine ionische Flüssigkeit in ein thermoplastisches kristallisationsfähiges Matrixpolymer bzw. eine Polymerzusammensetzung eingearbeitet wird. Zudem werden Verwendungszwecke der zuvor genannten Additivzusammensetzung, bestehend aus einem Azinfarbstoff sowie einer ionischen Flüssigkeit angegeben.

Thermoplastische Kunststoffe liegen entweder in amorpher oder (teil-) kristalliner Form vor. In amorphen Kunststoffen sind die Polymerketten ungeordnet. Amorphe Polymere wie z.B. Polystyrol, PVC oder Polycarbonat sind häufig transparent, glänzend, mechanisch spröde und weisen oft eine geringe chemische Beständigkeit auf. Bei der Verarbeitung im Schmelzprozess ist die Fließfähigkeit vergleichsweise eher niedrig, jedoch ist z.B. die Schwindung eines mit diesen amorphen Kunststoffen hergestellten Formteils gering, d. h. von Vorteil. Bei (teil-)kristallinen Kunststoffen sind die Polymerketten in sogenannten Lamellen in geordneter Weise aneinandergelagert. (Teil-)kristalline Polymere wie Polypropylen, Polyester oder Polyamid sind meist opak mit einem zähen, harten mechanischen Verhalten und guter chemischer Beständigkeit. Die Fließfähigkeit bei der Schmelzeverarbeitung ist häufig hoch, aber die Schwindung im Formteil ausgeprägt. Teilkristalline Polymere weisen neben kristallinen Bereichen auch eine amorphe Phase auf. Die Eigenschaften von teilkristallinen Polymeren werden dann u.a. vom Anteil der Kristallite im Verhältnis zu den amorphen Anteilen, dem sogenannten Kristallisationsgrad, der Form der Kristallite (sogenannte Sphärolite), der Größe, der Anzahl und der Verteilung der Kristallite in der amorphen Matrix bestimmt.

Um bestimmte Eigenschaften von Kunststoffen bei der Verarbeitung und in der Anwendung gezielt anzupassen, kann dann u.a. das Kristallisationsverhalten von Kunststoffen durch die Verarbeitungsbedingungen, aber auch mit entsprechenden Additiven beeinflusst werden. Beispielsweise werden häufig sogenannte Nukleierungsmittel (oder Keimbildner) dem Kunststoff zugegeben. Diese Zusätze können dann die Zykluszeiten im Herstellungsprozess verringern, die Transparenz des Kunststoffs erhöhen, die mechanischen Eigenschaften und die Wärmeformbeständigkeit verbessern (siehe z.B. J. Kurja, N. A. Mehl, Nucleating agents for semicrystalline polymers in Plastic Additives Handbook, 6th Edition, H. Zweifel, R.D. Maier, M. Schiller (Herausgeber), München 2009, Seite 967-990). Als Nukleierungsmittel wird eine Vielzahl an chemischen Substanzklassen eingesetzt wie z.B. Sorbitolderivate, Metallphosphate oder Arylamide in Polypropylen, Alkalimetallsalze wie z.B. Natriumbenzoat in Polyethylenterephthalat (PET) und Talk oder Erdalkalisalze von Adipinsäure bei Polyamiden. Physikalische und chemische Vorgänge der Nukleierung von Polymeren sind z.B. in J.P. Mercier, Pol. Eng. Sci. 1990, 30, 270-278 beschrieben.

Andererseits kann es auch für bestimmte Anwendungen oder zum Erreichen bestimmter Kunststoff-Eigenschaften erwünscht sein, die Kristallisation von teilkristallinen Polymeren zu verhindern oder zu verzögern. Allerdings gibt es hierzu nur sehr wenige Additive, die dies bewirken können. Bei Polyestern wird beispielsweise die Kristallisation durch Zugabe von SAN oder Polystyrol eingeschränkt (R.M.R. Wellen, M.S. Rabello, J. Appl. Pol. Sci. 2009, 114, 1884-1895, R.M.R. Wellen, M.S. Rabello, J. Appl. Pol. Sci. 2010, 116, 1077-1087, R.M.R. Wellen, E.L. Canedo, M.S. Rabello, J. Appl. Pol. Sci. 2012, 125, 2701-2710), bei Polyamiden werden aromatische Verbindungen (US 2005/02344159) u.a. für diesen Zweck vorgeschlagen.

Zur Herstellung von (teil-)kristallinen Polymeren insbesondere Polyamiden mit verzögerter Kristallisation bzw. erniedrigtem Kristallisationspunkt wurden verschiedene Substanzklassen untersucht wie z.B. polycyclische Aromaten (US 2005/02344159), darunter vor allem Farbstoffe wie Nigrosin (K. Sukata et al. J. Appl. Pol. Sci. 2006, 101, 3270-3274) oder diverse Metallsalze (DE 2012105, DE 2229803) wie z.B. Lithiumsalze (Y.Z. Xu et al. J. Appl. Pol. Sci. 2000, 77, 2685-2690). Die bisher beschriebenen Zusätze erfüllen jedoch nicht alle Anforderungen, insbesondre besteht ein Bedarf mit möglichst geringen Zusatzmengen eine signifikante Erniedrigung der Kristallisationstemperatur bzw. Verzögerung der Kristallisation zu erreichen. Geringe Zusatzmengen sind von Vorteil, da dadurch sonstige Polymereigenschaften geringer beeinflusst werden und weiterhin Kostenvorteile damit verbunden sind.

Bisher wurden ionische Flüssigkeiten in Polymeren zu unterschiedlichen Zwecken eingesetzt, z.B. beschreiben JP 20100202714, JP 2003313724, JP 2013253225, JP 2010209219 und WO 2011/069960 antistatische Polymerzusammensetzungen, die z.B. zur Verbesserung der Antistatikwirkung von ionischen Blockcopolymeren u.a. ionische Flüssigkeiten oder Metallsalze enthalten können. WO 2014/198539 beschreibt in ähnlicher Form den Einsatz von Polyamiden oder Polyurethanen zusammen mit ionischen Flüssigkeiten als leitfähige Füllstoffe für Beschichtungen.

WO 2004/005391 und CN 101580966 beschreiben eine Polymerzusammensetzung, wobei ionische Flüssigkeiten als Weichmacher eingesetzt werden. In WO 2004/005391 erfolgt allerdings durch die ionische Flüssigkeit bei 15 % Zusatz nur eine sehr geringe Erniedrigung der Schmelztemperatur eines Polyamid-Copolymeren.

CN 104073900 und auch WO 2004/005391 beanspruchen den Zusatz von ionischen Flüssigkeiten zu Polyamiden mit biozider Wirkung.

WO 2014/120488, WO 2012/021146, US 2011/0039467 beschreiben die Verwendung von ionischen Flüssigkeiten als Flammschutzmittel in Kunststoffen.

US 2014/0128519, WO 2012/084777 und WO 2012/084776 beanspruchen Nanokomposite mit Carbon Nanotubes bzw. auf Basis von anderen Additiven wie Ruß und ionischen Flüssigkeiten zur verbesserten Herstellbarkeit bzw. Leitfähigkeit.

US 2006/0173108 beschreibt die Kombination von Sorbitol-Nukleierungsmitteln u.a. mit ionischen Flüssigkeiten zur Verbesserung der Nukleierungswirkung, d. h. zur Erhöhung der Kristallisationstemperatur von Polypropylen.

WO 2006/107759 beschreibt Urethanacrylate mit einem Antinukleierungsmittel für die Stereolithographie. Beispielhaft wird 1,3-Dichlor-2-propanol-phosphat als Antinukleierungsmittel erwähnt. Die Aufgabe des Antinukleierungsmittels liegt dabei darin die Kristallisation im ungehärteten Harz zu verhindern, bei den Anwendungen handelt es sich nicht um thermoplastische Produkte.

J. Dou und Z. Liu beschreiben in Pol. Intern. 62, 2013, 1698-1710, dass der Zusatz von ionischen Flüssigkeiten als Matrix zur Polykondensation von Polyestern zur Kristallisationsbeschleunigung führt.

S. K. Chaurasia et al. beschreiben in Cryst. Eng. Comm. 2013, 15, 6022-6034, J. Pol. Sei. B: Pol. Phys. 2011, 49, 291-300, RSC Adv" 2015, 5, 8263-8277 und J. Raman Spectrosc. 201 1, 42, 2168-2172 die Verlangsamung der Kristallisationskinetik von Polyethylenoxid (PEO) und des entsprechenden Elektrolyts mit Lithiumperchlorat durch die Zugabe von 1-Butyl-3 methylimidazolium hexafluorphosphat und in Solid State lonics 183 (2011) 32-39 eine Verringerung der Kristallinität eines Polyethylenoxid (PEO) durch die Zugabe von 1-Ethyl-3-methylimidazoliumtosylat (EMIM-TY). Vergleichbare Ergebnisse präsentieren A. Karmakar und A. Ghosh in AIP Advances 2014, 4, 087112 mit der Zugabe von 1-Ethyl-3-methylimidazoliumtrifluormethanesulfonat zu einem Polyethylenoxid-LiCF₃SO₃-Elektrolyt.

M. Yousfi et al. beschreiben in Chem. Eng. J. 255 (2014) 513-524 eine Reduktion der Kristallisationstemperatur und Kristallisationskinetik der Polypropylene (PP) und der Polyamid 6 (PA6)-Phase in einem 80/20-Blend der beiden Polymere durch das Compoundieren mit Trihexyltetradecylphosphonium bis (trifluormethylsulfonyl)imid und Trihexyltetradecylphosphonium-bis 2,4,4-(trimethylpentyl)phosphinat.

Aufgabe der vorliegenden Erfindung war es daher, verbesserte Zusätze oder Additive zur Kristallisationsverzögerung bzw. zur Erniedrigung des Kristallisationspunktes von (teil-)kristallinen Polymeren insbesondere von Polyamiden und daraus resultierende Kunststoffzusammensetzungen zur Verfügung zu stellen.

Diese Aufgabe wird hinsichtlich einer Polymerzusammensetzung mit den Merkmalen des Patentanspruchs 1 gelöst. Zudem wird mit Patentanspruch 11 eine Additivzusammensetzung zur Kristallisationsverzögerung und/oder zur Erniedrigung des Kristallisationspunktes von kristallisationsfähigen thermoplastischen Polymeren oder Polymerzusammensetzungen angegeben. Mit Patentanspruch 14 betrifft die vorliegende Erfindung ein Verfahren zur Kristallisationsverzögerung und/oder zur Erniedrigung des Kristallisationspunktes eines kristallisationsfähigen thermoplastischen Polymeren, Verwendungszwecke dieser Additivzusammensetzung werden mit Patentanspruch 16 angegeben.

Die Erfindung betrifft somit eine Polymerzusammensetzung, enthaltend oder bestehend aus
a) einer Matrix aus mindestens einem kristallisationsfähigen thermoplastischen Polymeren,
b) mindestens einem Azinfarbstoff, und
c) mindestens einer ionischen Flüssigkeit.

Kristallisationsfähige thermoplastische Polymere weisen dabei einen Kristallitschmelzpunkt auf, der beispielsweise durch Differential Scanning Calorimetry (DSC) oder durch Differential Mechanical Analysis (DMA) nachgewiesen werden kann.

Die unter Merkmal b) gelisteten Azinfarbstoffe sind handelsübliche Produkte und beispielsweise in H. Bernetz, Azine Dyes, Ullmann's Encyclopedia of Industrial Chemistry (DOI 10.1002/14356007.a03_213.pub3) beschrieben. Bevorzugte Azinfarbstoffe sind Induline und Nigrosine, ganz besonders bevorzugt sind Nigrosine. Für die Zwecke der vorliegenden Erfindung hinsichtlich der erfindungsgemäß eingesetzten Azinfarbstoffe wird auf die Definition der zuvor genannten Literaturstelle verwiesen.

Zusätzlich kann die erfindungsgemäße Zusammensetzung Metallsalze enthalten.Es kann sich dabei um anorganische oder organische Salze handeln. Bevorzugte ein, zwei, drei oder vierwertige Metallsalze sind insbesondere Alkali und Erdalkalisalze, sowie Zink-Salze, ganz besonders bevorzugt sind Alkali- und Erdalkalihalogenide wie z.B. Lithiumchlorid, Lithiumbromid, Magnesiumchlorid und Calciumchlorid. Diese Salze sind im Handel erhältlich.

Überraschenderweise konnte festgestellt werden, dass die Kombination eines Azinfarbstoffes und mit einer ionischen Flüssigkeit zu einer merklichen Erniedrigung des Kristallisationspunktes bzw. zur Kristallisationsverzögerung bei zur kristallisationsfähigen Polymeren führt. Überraschend hierbei war insbesondere, dass die Kombination von ausgewählten Farbstoffen wie z.B. Nigrosin mit ionischen Flüssigkeiten zu einem synergistischen Einfluss auf die Kristallisation von kristallisationsfähigen Thermoplasten, insbesondere bei Polyamiden führt.

In keiner der o. a. Literaturstellen wird eine synergistische Zusammensetzung gemäß der vorliegenden Erfindung berichtet. Da zudem mehrere Literaturstellen die gegenteilige Wirkung von ionischen Flüssigkeiten, d. h. eine Kristallisationsbeschleunigung zeigen, ist der hier gefundene Synergismus als besonders überraschend anzusehen.

Es werden somit neue Kombinationen zur Erniedrigung der Kristallisationstemperatur von (teil-)kristallinen Polymeren vorgeschlagen, die gegenüber heutigen Produkten in vergleichsweise niedrigen Einsatzkonzentrationen eine hohe Wirkung erzielen. Durch die geringen Einsatzkonzentrationen werden andere Polymereigenschaften nicht oder geringer negativ beeinflusst als im herkömmlichen Fall. Die eingesetzten Zusammensetzungen sind kostengünstig großtechnisch verfügbar.

Gemäß einer bevorzugten Ausführungsform ist der mindestens eine Azinfarbstoff ausgewählt aus der Gruppe bestehend aus Phenazin-Farbstoffen, Oxazin-Farbstoffen, Thiazin-Farbstoffen und/oder Bisazin-Farbstoffen.

Insbesondere sind als Azinfarbstoff Nigrosine und/oder Induline einsetzbar, wobei Nigrosine insbesondere bevorzugt sind.

Bevorzugt ist die mindestens eine ionische Flüssigkeit dabei ausgewählt aus der Gruppe c) bestehend aus Verbindungen aus einem organischen Kation und einem organischen oder anorganischen Anion mit einem Schmelzpunkt bei Normaldruck von kleiner 150 °C.

Bevorzugt ist das organische Kation ausgewählt aus der Gruppe bestehend aus Methyltri-(1-butyl)ammonium, 2-Hydroxyethylammonium, 1-Methylimidazolium, 1-Ethylimidazolium, 1-(1-Butyl)imidazolium, 1-(1-Octyl)-imidazolium, 1-(1-Dodecyl)imidazolium, 1-(1-Tetradecyl)imidazolium, 1-(1-Hexadecyl)imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methylimidazolium, 1-(1-Hexyl)-3-ethylimidazolium, 1-(1-Hexyl)-3-butylimidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octyl-imidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octyl-imidazolium, 1-(1-Hexadecyl)-3-methyl-imidazolium, 1-(1-Hexadecyl)-3-ethylimidazolium, 1-(1-Hexadecyl)-3-butyl-imidazolium, 1-(1-Hexadecyl)-3-octyl-imidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium, Ethyltributylphosphonium, Tetrabutylphosphonium, Tetraoctylphosphonium, Tributylmethylphosphonium, Tributyltetradecylphosphonium, TrihexylTetradecylphosphonium, 1-Butyl-1-methylpiperidinium oder 1-Methyl-1-propylpiperidinium.

Das organische oder anorganische Anion ist bevorzugt ausgewählt aus der Gruppe bestehend aus Chlorid, Bromid, Hydrogensulfat, Tetrachloroaluminat, Thiocyanat, Methylsulfat, Ethylsulfat, Methansulfonat, Formiat, Acetat, Dimethylphosphat, Diethylphosphat, p-Toluolsulfonat, Tetrafluoroborat, Hexafluorophosphat, Bis(trifluoromethylsulfonyl)imid oder Bis(2,4,4-trimethylpentyl)phosphinat.

Insbesondere ist die ionische Flüssigkeit ausgewählt aus der Gruppe bestehend aus 1-Ethyl-3-methylimidazolium, Trihexyltetradecylphosphonium oder 1-Methyl-1-propylpiperidinium als Kation und Chlorid, Hexafluorophosphat, Bis(trifluoromethylsulfonyl)imid oder Bis(2,4,4-trimethylpentyl)phosphinat als Anion.

Besonders bevorzugte ionische Flüssigkeiten sind Handelsprodukte, die z.B. von BASF SE, Ludwigshafen oder von lolitec, Heilbronn bezogen werden können.

Das ggf. zusätzliche Metallsalz ist bevorzugt ausgewählt aus der Gruppe bestehend aus Alkalimetallsalzen, Erdalkalimetallsalzen sowie Übergangsmetallsalzen, bevorzugt Alkalihalogeniden oder-pseudohalogeniden, Erdalkalimetallhalogeniden oder-pseudohalogeniden sowie Übergangsmetallhalogeniden oder -pseudohalogeniden, insbesondere Lithiumchlorid, Lithiumbromid, Lithiumbenzoat, Magnesiumchlorid, Calciumchlorid und/oder Zinkchlorid.

Hinsichtlich des Mischungsverhältnisses der Gesamtheit des Azinfarbstoffes zur mindestens einen ionischen Flüssigkeit sind Gewichtsverhältnisse von 1:99 bis 99:1, bevorzugt von 10:90 bis 90:10, weiter bevorzugt von 80:20 bis 20:80 bevorzugt. Für den Fall, dass zusätzlich zum mindestens einen Azinfarbstoff ein oder mehrere der zuvor genannten Metallsalze anwesend sind, umfasst das voranstehend angegebene Gewichtshältnis die Summe aller Azinfarbstoffe und Metallsalze, bezogen auf die ionische Flüssigkeit.

Bevorzugte kristallisationsfähige thermoplastische Polymere der Polymermatrix sind dabei ausgewählt aus der Gruppe bestehend aus
a) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol, sowie Blends von unterschiedlichen Polyamiden, insbes. von PA-6 und PA-6.6,
b) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen
c) Polyacetale, wie z.B. Polyoxymethylen (POM) oder Copolymere mit z.B. Butanal,
d) Polyphenylenoxide und Blends mit Polystyrol oder Polyamiden,
e) Polyimide, Polyamid-imide, Polyetherimide, Polyesterimide, Poly-(ether)ketone, Polyarylsulfone, Polyphenylensulfid, Polybenzimidazole, Polyhydantoine,
f) Polyester aus aliphatischen oder aromatischen Dicarbonsäuren oder Diolen oder aus Hydroxy-Carbonsäuren wie z.B. Polyethylenterephthalat (PET), Polybutylenterephthalat (PBT), Polypropylenterephthalat (PPT), Polyethylennaphthylat, Poly-1,4-dimethylolcyclohexanterephthalat, Polyhydroxybenzoat, Polyhydroxynaphthylat, Polymilchsäure (PLA), Polyhydroxybutyrat (PHB), Polyhdroxyvalerat (PHV),
g) sowie Mischungen, Kombinationen oder Blends aus zwei oder mehr der zuvor genannten Polymere oder auch um Kombinationen oder Blends der (teil-)kristallinen Polymeren mit amorphen Polymeren z.B. auf der Basis von Polystyrolen, halogenhaltigen Polymeren wie PVC, Polyurethanen oder Polycarbonaten.

Sofern es sich bei den o.a. Polymeren um Copolymere handelt, können diese in Form von statistischen ("random"), Block- oder "tapered" Strukturen vorliegen oder als Stereoblockcopolymere.

Sofern es sich um stereoreguläre Polymere handelt, können diese in Form von isotaktischen, stereotaktischen, aber auch ataktischen Formen vorliegen.

Ggf. können die unter genannten (teil-)kristallinen Polymere auch vernetzt vorliegen. Eine Vernetzung kann dabei z.B. durch Zugabe von Radikalbildnern oder durch Strahlung wie Elektronenstrahlen, beta- oder gamma-Strahlen während der Verarbeitung oder in einen nachfolgenden Schritt erfolgen.

Die genannten Polymeren a) bis f) können dabei nicht nur als Neuware sondern auch in Form von Rezyklaten vorliegen, z.B. als Produktionsabfälle oder aus Wertstoffsammlungen ("post-consumer" Rezyklate).

Die Polymermatrix besteht dabei bevorzugt aus den zuvor genannten Polymeren, d.h. die gesamte Zusammensetzung enthält bis auf die zuvor genannten Polymere keine weiteren Polymere.

Gemäß einer besonders bevorzugten Ausführungsform besteht die Polymermatrix aus einem Polymer, ausgewählt aus der Gruppe bestehend aus Polyamiden und Polyestern, insbesondere Polyamid 6, Polyamid 66, Polyethylenterephthalat, Polybutylenterephthalat und Polymilchsäure. Hierbei sind insbesondere Polyamide bevorzugt, ganz besonders bevorzugt Polyamid 6 bzw. Polyamid 66, , sowie Blends von Polyamid-6 und Polyamid-6.6.

Zudem ist bevorzugt, dass die Polymerzusammensetzung
a) 99,98 bis 70 Gew.-Teilen, bevorzugt 99,97 bis 80 Gew.-Teilen, besonders bevorzugt 99,94 bis 91 Gew.-Teilen einer Matrix aus mindestens einem kristallisationsfähigem thermo-plastischen Polymeren,
b) 0,01 bis 10 Gew.-Teilen, bes bevorzugt 0,01 bis 7.5 Gew.-Teilen und besonders bevorzugt 0.02 bis 3 Gew.-Teilen mindestens eines Azinfarbstoffs,
c) 0,01 bis 10 Gew.-Teilen, bevorzugt 0,01 bis 7,5 Gew.-Teilen, besonders bevorzugt 0,02 bis 3 Gew.-Teilen mindestens einer ionischen Flüssigkeit sowie
d) und optional 0 bis 10 Gew. Teile, bevorzugt 0,01 bis 5 Gew.-Teile, besonders bevorzugt 0,02 bis 3 Gew. Teile mindestens eines ein, zwei, drei und/oder vierwertigen Metallsalzes.
wobei sich die Gewichtsteile der Bestandteile a) bis d) zu 100 Gew.-Teilen addieren.

Insbesondre bevorzugt ist eine Polymerzusammensetzung, enthaltend oder bestehend aus
a) 99,98 bis 70 Gew.-Teilen, bevorzugt 99,97 bis 80 Gew.-Teilen, besonders bevorzugt 99,94 bis 91 Gew.-Teilen einer Matrix aus mindestens einem Polyamid oder Polyester,
b) 0,01 bis 10 Gew.-Teilen, bevorzugt 0,01 bis 7,5 Gew.-Teilen, besonders bevorzugt 0,02 bis 3 Gew.-Teilen mindestens eines Nigrosins,
c) 0,01 bis 10 Gew.-Teilen, bevorzugt 0,01 bis 7,5 Gew.-Teilen, besonders bevorzugt 0,02 bis 3 Gew.-Teilen mindestens einer ionischen Flüssigkeit, sowie ggfs.
d) 0 bis 10 Gew.-Teilen, bevorzugt 0,01 bis 5 Gew.-%, besonders bevorzugt 0,02 bis 3 Gew.-Teilen mindestens eines Alkali- oder Erdalkalihalogenids oder-pseudohalogenids,
wobei sich die Gewichtsteile der Bestandteile a) bis d) zu 100 Gew.-Teilen addieren.

Zusätzlich kann die Zusammensetzung weitere Zusatzstoffe beinhalten, insbesondere ausgewählt aus der Gruppe bestehend aus UV-Absorber, der Lichtstabilisatoren, der Stabilisatoren, der Hydroxylamine, der Benzofuranone, der Metalldesaktivatoren, der Füllstoffdesaktivatoren, der Flammschutzmittel, der Nukleierungsmittel, Schlagzähigkeitsverbesserer, Weichmacher, Gleitmittel, Rheologiemodifikatoren, Verarbeitungshilfsmittel, Entformungshilfsmittel, Pigmente, Farbstoffe, Füllstoffe, Verstärkungsstoffe, optische Aufheller, antimikrobielle Wirkstoffe, Antistatika, Slipmittel, Antiblockmittel, Kopplungsmittel, Kettenverlängerer ("chain-extender"), Dispergiermittel, Kompatibilisatoren, Sauerstofffänger, Säurefänger, Markierungsmittel, Antifoggingmittel sowie Mischung und Kombinationen aus mindestens zwei der zuvor genannten Zusatzstoffen.

In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel und/oder Flammschutzmittel und/oder Füllstoffe/Verstärkungsstoffe und/oder Kettenverlängerer.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete phenolische Antioxidantien sind beispielsweise: Octadecyl-3-(3,5-di-*tert*-butyl-4-hydroxyphenyl)propionat, Pentaerythritoltetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

### Geeignete Phosphite/Phosphonite sind beispielsweise:

Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)-methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

Weitere geeignete Stabilisatoren sind aminische Antioxidantien, wie z. B. N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)-propan, (o-Tolyl)biguanid, Bis[4-(1',3'-dimethylbutyl)phenyl]amin, *tert-*octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel:

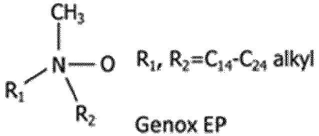

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel:

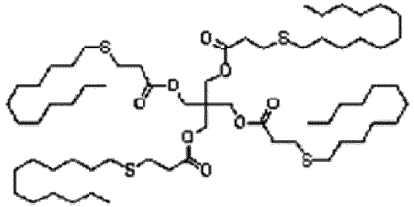

Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin-Kupfer-(I)-Komplexe

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

### Geeignete Dispergiermittel sind beispielsweise:

Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z. B. Polyethylen-block-Polyethylenoxid, Dendrimere, z.B. hydroxylgruppenhaltige Dendrimere.

Geeignete Flammschutzmittel sind beispielsweise:
a) anorganischen Flammschutzmittel wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmittel wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melamin-Metall-Phosphate wie z.B. Melaminaluminumphosphat, Melaminzinkphosphat, Melaminmagnesiumphopsphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid,
c) Radikalbildner, wie z.B. Alkoxyamine, Hydroxylaminester, Azoverbindungen, Dicumyl oder Polycumyl, Hydroxyimide und deren Derivate wie z.B. Hydroxyimidester oder Hydroxyimidether
d) Phosphorhaltige Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
e) Halogenhaltige Flammschutzmittel auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis-(tribromphenoxy)ethan, Hexabromcyclododecan, bromiertes Diphenylethan, Tris-(2,3-dibrompropyl)isocyanurat, Ethylen-bis-(tetrabromophthalimid), Tetrabromo-bisphenol A, bromiertes Polystyrol, bromiertes Polybutadien bzw, Polystyrol-bromiertes Polybutadien-Copolymere, bromierter Polyphenylenether, bromiertes Epoxidharz, Polypentabrombenzylacrylat, ggf. in Kombination mit Sb₂O₃ und/oder Sb₂O₅,
f) Borate wie z.B. Zinkborat oder Calciumborat, ggf. auf Trägermaterial wie z.B. Silica
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) siliciumhaltige Verbindungen wie z.B. Polyphenylsiloxane,
j) Kohlenstoffmodifikationen wie z.B.Carbon-Nanoröhren (CNT) oder Graphen
sowie Kombinationen oder Mischungen hieraus.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)-oxylyldihydrazid, N,N'-Bis(salicyloyl)thiopropionyldihydrazid.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Pigmente können anorganischer oder organischer Natur sein. Geeignete anorganische Pigmente sind beispielsweise Titandioxid, Zinkoxid, Zinksulfid, Eisenoxid, Ultramarin, Ruß. Geeignete organische Pigmente sind beispielsweise Anthrachinone, Anthanthrone, Benzimidazolone, Chinacridone, Diketopyrrolopyrrole, Dioxazine, Indanthrone, Isoindolinone, AzoVerbindungen, Perylene, Phthalocyanine oder Pyranthrone. Weitere geeignete Pigmente sind Effektpigmente auf Metallbasis oder Perlglanzpigmente auf Metalloxid-Basis.

Optische Aufheller sind beispielsweise Bisbenzoxazole, Phenylcumarine oder Bis(styryl)biphenyle.

Geeignete Füllstoffdesaktivatoren sind beispielsweise Epoxide wie z.B. Bisphenol-A-diglycidylether, Polysiloxane, Polyacrylate insbesondere Blockcopolymere wie Polymethacrylsäure-polyalkylenoxid oder Polystyrol-Polyacrylat-Polyglycidyl(meth)acrylat-Copolymere.

Geeignete Antistatika sind beispielsweise ethoxylierte Alkylamine, Fettsäureester, Alkylsulfonate und Polymere wie z.B. Polyetheramide oder Copolymere, die Salze der Acrylsäure beinhalten, wie z.B. Polyethylen-Polyacrylat-Polyacrylat-Na-Copolymere.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern, sowie Metallfasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, IIIit, Kaolinit, Wollastonit, Attapulgit, Sepiolit.

Geeignete Entformungshilfsmittel sind beispielsweise Montanwachse.

Diese erfindungsgemäße Polymerzusammensetzung eignet sich insbesondere zur Weiterverarbeitung zu speziellen Formteilen, wie z.B. Spritzgussteilen, Folien oder Filmen, Schäumen, Fasern, Kabeln und Rohren, Profilen, Hohlkörpern, Bändchen, Membranen, wie z.B. Geomembranen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Diese Formteile zählen ebenso zur vorliegenden Erfindung.

Eine weitere bevorzugte Anwendung der erfindungsgemäßen Zusammensetzungen sind Polymerwerkstoffe, die für die generative Fertigung ("Additives Manufacturing")-Verfahren eingesetzt werden, wie z.B. Lasersintern oder 3D-Druck.

Eine weitere bevorzugte Anwendung der erfindungsgemäßen Zusammensetzungen sind Polymerwerkstoffe, die sich zum Kunststoffschweißenwie z.B. Laserschweißen eignen.

Die vorliegende Erfindung betrifft zudem eine Additivzusammensetzung zur Kristallisationsverzögerung und/oder zur Erniedrigung des Kristallisationspunktes von kristallisationsfähigen thermoplastischen Polymeren oder Polymerzusammensetzungen, bestehend aus oder enthaltend
a) mindestens einem Azinfarbstoff sowie
b) mindestens einer ionischen Flüssigkeit.

Überraschenderweise konnte festgestellt werden, dass diese Additivzusammensetzung in der Lage ist, das Kristallisationsverhalten von kristallisationsfähigen thermoplastischen Polymeren oder Polymerzusammensetzungen dahingehend zu beeinflussen, dass die Zugabe einer erfindungsgemäßen Additivzusammensetzung zur Kristallisationsverzögerung und/oder zur Erniedrigung des Kristallisationspunktes des thermoplastischen Polymeren führt. Weiterhin können durch diesen Zusatz bzw, das dadurch ausgelöste Kristallisationsverhalten weitere Eigenschaften des Kunststoffs beeinflusst werden, wie z.B. die Oberflächenbeschaffenheit, Oberflächengüte, weniger sichtbare Bindenähte, Glanz, verreingerter Schrumpf bei der Herstellung, verbesserte mechanische Eigenschaften, elektrische Eigenschaften, rheologische Eigenschaften, verbessertes Alterungsverhalten , thermische Stabilität. Weiterhin kann ein erhöhter amorpher Anteil im teilkristallinen Kunststoff erreicht werden.

Bevorzugte Vertreter der Azinfarbstoffe, Metallsalze und ionischen Flüssigkeiten wurden bereits voranstehend beschrieben.

Das Gewichtsverhältnis der Gesamtheit des mindestens einen Azinfarbstoffes zur mindestens einen ionischen Flüssigkeit beträgt von 1:99 bis 99:1, bevorzugt von 10:90 bis 90:10, weiter bevorzugt von 80:20 bis 20:80 .

Die vorliegende Erfindung betrifft ebenso Verfahren zur Kristallisationsverzögerung und/oder zur Erniedrigung des Kristallisationspunktes eines kristallisationsfähigen thermoplastischen Polymeren, bei dem eine zuvor beschriebene erfindungsgemäße Additivzusammensetzung in eine Polymermatrix, enthaltend oder bestehend aus mindestens einem kristallisationsfähigem thermoplastischen Polymeren zugegeben wird, die Polymermatrix in die Schmelze überführt und anschließend abgekühlt wird. Alternativ hierzu ist es ebenso möglich, die zuvor genannte Additivzusammensetzung in eine in schmelzflüssigem Zustand befindliche Polymermatrix, enthaltend oder bestehend aus mindestens einem kristallisationsfähigem thermoplastischen Polymeren eingearbeitet und anschließend abgekühlt wird.

Für den Fall, dass der Polymerzusammensetzung weitere Bestandteile zugefügt werden , können diese separat, in Form von Flüssigkeiten, Pulvern, Granulaten oder kompaktierten Produkten oder zusammen mit der erfindungsgemäßen Additivzusammensetzung wie zuvor beschrieben den Polymeren zugesetzt werden.

Die Einarbeitung der oben beschriebenen Additivzusammensetzung und ggf. der zusätzlichen Additive in den Kunststoff erfolgt durch übliche Verarbeitungsmethoden, wobei das Polymere aufgeschmolzen und mit der erfindungsgemäßen Additivzusammensetzung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen erfolgen.

Weiterhin können die erfindungsgemäßen Additivzusammensetzungen in Form von sogenannten Masterbatchen oder Konzentraten, die beispielsweise 10-90 % der erfindungsgemäßen Zusammensetzungen in einem Polymeren enthalten, hergestellt und eingebracht werden.

Zudem betrifft die vorliegende Erfindung die Verwendung einer erfindungsgemäßen Additivzusammensetzung zur Kristallisationsverzögerung und/oder Verringerung der Kristallisationsgeschwindigkeit und/oder zur Erniedrigung des Kristallisationspunktes von kristallisationsfähigen thermoplastischen Polymeren.

Die vorliegende Erfindung wird anhand der nachfolgenden Ausführungsformen näher beschrieben, ohne die Erfindung jedoch auf die dargestellten bevorzugten Parameter zu beschränken.

### Ausführungsbeispiele: Herstellung und Prüfung von Polyamidformmasen mit verringerter Kristallisationstemperatur

Ein Polyamid 6 (Alphaion 27, Grupa Azoty ATT Polymers GmbH) wurde mit 1-Ethyl-3- methylimidazoliumchlorid (loli yt 0093, IOLITEC Heilbronn) und/oder Nigrosin in der Schmelze gemischt. Die Zusammensetzungen sind in Tabelle 1 beschrieben. Die Verarbeitung in der Schmelze wurde mit einem gleichläufigen Doppelschneckenextruder (Thermo Scientific Process 11) durchgeführt. Die Schneckendrehzahl betrug 450 min-1, bei einem Durchsatz von 800 gh-1 und einer Schmelzetemperatur von 260°C. Die heiße Schmelze wurde dann in einem Wasserbad gekühlt undanschließend stranggranuliert.

Die thermische Analyse der Compounds wurde mittels dynamischer Differenzkalorimetrie (DSC) durchgeführt. Zur Untersuchung des Schmelz- und Kristallisationsverhaltens wurde eine DSC 822e (Mettler-Toledo AG) mit einem konstanten Stickstoffdurchfluss von 20 ml min-1 und einer Stickstoffkühlung verwendet. Die Temperatur und der Wärmestrom wurden mit Indium und Zink kalibriert. Die Probemenge betrug immer 5 mg mit einer Abweichung von ±0, 1 mg. Verwendet wurde ein Aluminium-Tiegel. Die Proben wurden mit 10°C min⁻¹ von 0°C auf 270°(erhitzt und dort für 3 min gehalten. Danach wurde die Probe mit 10°C min⁻¹ wieder auf 0°C abgekühlt. Dieser Zyklus wurde zweimal wiederholt. Die Analyse der Kennwerte Schmelztemperatur Ts, Peakkristallisationstemperatur T_{PC} und Kristallisationsenthal pie ΔHc (Jg⁻¹) wurde anhand des zweiten Heiz- und Kühlzyklus vorgenommen. Der erfindungsrelevante Kennwert T_{PC} ist inTabelle 1für alle Beispiele dargestellt.

**Tabelle 1**

| **Beispiel** | **Additiv(e)** | **Gew.[%]** | **T_{PC}[°C]** |
|---|---|---|---|
| Vergleichsbeispiel 1 | Nigrosin | 0,5 | 181,2 |
| Vergleichsbeispiel 2 | Nigrosin | 3,0 | 180,4 |
| Vergleichsbeispiel 3 | 1-Ethyl-3-methylimidazoliumchlorid | 0,5 | 184,6 |
| Verqleichsbeispiel 4 | 1-Ethyl-3-methylimidazoliumchlorid | 1,5 | 182,9 |
| Vergleichsbeispiel 5 | 1-Ethyl-3-methylimidazoliumchlorid | 3,0 | 181,8 |
| Vergleichsbeispiel 6 | 1-Butyl-3-methylimidazoliumhexafluorophosphat | 1,5 | 182,9 |
| Vergleichsbeispiel 7 | 1-Butyl-3-methylimidazoliumhexafluorophosphat | 3,0 | 180,0 |
| Erfindungsgemäßes Beispiel 1 | Nigrosin /1-Ethyl-3-methylimidazoliumchlorid | 0,5 | 180,1 |
| Erfindungsgemäßes Beispiel 2 | Nigrosin / 1-Ethyl-3-methylimidazoliumchlorid | 1,5 | 178,3 |
| Erfindungsgemäßes Beispiel 3 | Nigrosin / 1-Ethyl-3-methylimidazoliumchlorid | 3,0 | 175,8 |
| Erfindungsgemäßes Beispiel 4 | Nigrosin / 1-Ethyl-3-methylimidazoliumchlorid 1:2 | 3,0 | 180,2 |
| Erfindungsgemäßes Beispiel 5 | Nigrosin / 1-Ethyl-3-methylimidazoliumchlorid 2: 1 | 3,0 | 173,7 |
| Erfindungsgemäßes Beispiel 6 | Nigrosin / 1-Butyl-3-methylimidazoliumhexafluorophosphat 1:1 | 3,0 | 176,4 |

Für die o. g. Beispiele wurden die folgenden Produkte verwandt: Nigrosin : NIGROSINBASE BA01 (LANXESS Deutschland GmbH) 1-Ethyl-3-methylimidazoliumchlorid: IoLiLyt 0093 (IOLITEC, Heilbronn) 1-Butyl-3-methylimidazolium-hexafluorophosphat: 1-Butyl-3-methylimidazolium Hexafluorophosphate (TCI Europe N.V.)

Die erfindungsgemäßen Beispiele zeigen überraschenderweise bei gleichen Konzentrationen eine deutlich verringerte Kristallisationstemperatur im Vergleich zu den Vergleichsbeispielen, welche nur eine der beiden Komponenten der erfindungsgemäßen Beispiele enthalten.

## Patentansprüche

1. Polymerzusammensetzung, enthaltend oder bestehend aus
a) einer Matrix aus mindestens einem kristallisationsfähigem thermoplastischen Polymeren,
b) mindestens einem Azinfarbstoff sowie
c) mindestens einer ionischen Flüssigkeit.

2. Polymerzusammensetzung nach Anspruch 1, **dadurch gekennzeichnet, dass** der mindestens eine Azinfarbstoff ausgewählt ist aus der Gruppe bestehend aus Phenazin-Farbstoffen, Oxazin-Farbstoffen, Thiazin-Farbstoffen und/oder Bisazin-Farbstoffen, insbesondere ausgewählt ist aus der Gruppe bestehend aus Nigrosinen und/oder Indulinen.

3. Polymerzusammensetzung nach einem der vorhergehenden Ansprüche, **dadurch gekennzeichnet, dass** die mindestens eine ionische Flüssigkeit ausgewählt ist aus der Gruppe bestehend aus Verbindungen aus einem organischen Kation und einem organischen oder anorganischen Anion mit einem Schmelzpunkt bei Normaldruck von kleiner 150 °C, wobei
das organische Kation bevorzugt ausgewählt ist aus der Gruppe bestehend aus Methyltri-(1-butyl)ammonium, 2-Hydroxyethylammonium, 1-Methylimidazolium, 1-Ethylimidazolium, 1-(1-Butyl)imidazolium, 1-(1-Octyl)imidazolium, 1-(1-Dodecyl)imidazolium, 1-(1-Tetradecyl)imidazolium, 1-(1-Hexadecyl)imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methylimidazolium, 1-(1-Hexyl)-3-ethylimidazolium, 1-(1-Hexyl)-3-butylimidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazoli um, 1-(1-Hexadecyl)-3-methyl-imidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazoliurn, 1,4,5-Trimethyl-3-ethylimidazolium, 1,4,5-Trimethyl-3-butylimidazolium, 1,4, 5-Trimethyl-3-octyl-imidazolium, Ethyltributylphosphonium, Tetrabutylphosphonium, Tetraoctylphosphonium, Tributylmethylphosphonium, Tributyltetradecylphosphonium, Trihexyltetradecylphosphonium, 1-Butyl-1-methylpiperidinium oder 1-Methyl-1-propylpiperidinium
und das organische oder anorganische Anion bevorzugt ausgewählt ist aus der Gruppe bestehend aus Chlorid, Bromid, Hydrogensulfat, Tetrachloroaluminat, Thiocyanat, Methylsulfat, Ethylsulfat, Methansulfonat, Format, Acetat, Dimethylphosphat, Diethylphosphat, p-Toluolsulfonat, Tetrafluoroborat, Hexafluorophosphat, Bis(trifluoromethylsulfonyl)-imid oder bis(2,4,4-trimethylpentyl)phosphinat
wobei die ionische Flüssigkeit insbesondere ausgewählt ist aus der Gruppe bestehend aus 1-Ethyl-3-methylimidazolium, Trihexyltetradecylphosphonium oder 1-Methyl-1-propylpiperidinium als Kation und Chlorid, Hexafluorophosphat, Bis(trifluormethylsulfonyl)imid oder Bis(2,4,4-trimethylpentyl)phosphinat als Anion.

4. Polymerzusammensetzung nach einem der vorhergehenden Ansprüche, **dadurch gekennzeichnet, dass** zusätzlich mindestens ein ein-, zwei-, drei- und/oder vierwertige Metallsalz, ausgewählt ist aus der Gruppe bestehend aus Alkalimetallsalzen, Erdalkalimetallsalzen sowie Übergangsmetallsalzen, enthalten ist oder die Polymerzusammensetzung aus den genannten Komponenten besteht, wobei bevorzugt das mindestens eine ein-, zwei-, drei- und/oder vierwertige Metallsalz ausgewählt ist aus der Gruppe bestehend aus Alkalimetallhalogeniden oder-pseudohalogeniden, Erdalkalimetallhalogeniden oder-pseudohalogeniden sowie Übergangsmetallhalogeniden oder -pseudohalogeniden, insbesondere Lithiumchlorid, Lithiumbromid, Lithiumbenzoat, Magnesiumchlorid, Calciumchlorid und/oder Zinkchlorid.

5. Polymerzusammensetzung nach einem der vorhergehenden Ansprüche, **dadurch gekennzeichnet, dass** das Gewichtsverhältnis der Gesamtheit des mindestens einen Azinfarbstoffes und des ggf. vorhandenen mindestens einen ein-, zwei-, drei- und/oder vierwertigen Metallsalzes zur mindestens einen ionischen Flüssigkeit von 1:99 bis 99:1, bevorzugt von 10:90 bis 90:10, weiter bevorzugt von 80:20 bis 20:80 beträgt.

6. Polymerzusammensetzung nach vorhergehendem Anspruch, **dadurch gekennzeichnet, dass** das mindestens eine kristallisationsfähige thermoplastische Polymere der Polymermatrix ausgewählt ist aus der Gruppe bestehend aus
a) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol, sowie Blends von unterschiedlichen Polyamiden, insbes. von PA-6 und PA-6.6,
b) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen
c) Polyacetale, wie z.B. Polyoxymethylen (POM) oder POM-Copolymere mit z.B. Butanal,
d) Polyphenylenoxide und Blends mit Polystyrol oder Polyamiden,
e) Polyimide, Polyamid-imide, Polyetherimide, Polyesterimide, Poly(ether)ketone, Polyarylsulfone, Polyphenylensulfid, Polybenzimidazole, Polyhydantoine,
f) Polyester aus aliphatischen oder aromatischen Dicarbonsäuren oder Diolen oder aus Hydroxy-Carbonsäuren wie z.B. Polyethylenterephthalat (PET), Polybutylenterephthalat (PBT), Polypropylenterephthalat (PPT), Polyethylennaphthylat, Poly-1,4-dimethylolcyclohexanterephthalat, Polyhydroxybenzoat, Polyhydroxynaphthylat, Polymilchsäure (PLA), Polyhydroxybutyrat (PHB), Polyhydroxyvalerat (PHV),
g) sowie Mischungen, Kombinationen oder Blends aus zwei oder mehr der zuvor genannten Polymere wie z.B. Polyamid 6/6.6, Polyamid/Polypropylen, PBT/PET,
wobei
die Polymermatrix insbesondere aus einem Polymer, ausgewählt aus der Gruppe bestehend aus Polyamiden und Polyestern, insbesondere Polyamid 6, Polyamid 66, Polyethylenterephthalat, Polybutylenterephthalat und Polymilchsäure, besteht.

7. Polymerzusammensetzung nach einem der vorhergehenden Ansprüche, enthaltend oder bestehend aus
a) 99,98 bis 70 Gew.-Teilen, bevorzugt 99,97 bis 80 Gew.-Teilen, besonders bevorzugt 99,94 bis 91 Gew.-Teilen einer Matrix aus mindestens einem kristallisationsfähigem thermoplastischen Polymeren, insbesondere mindestens einem Polyamid oder Polyester
b) 0,01 bis 10 Gew.-Teilen, bevorzugt 0,01 bis 7,5 Gew.-Teilen, besonders bevorzugt 0,02 bis 3 Gew.-Teilen mindestens eines Azinfarbstoffs, insbesondere mindestens eines Nigrosins
c) 0,01 bis 10 Gew.-Teilen, bevorzugt 0,01 bis 7,5 Gew.-Teilen, besonders bevorzugt 0,02 bis 3 Gew.-Teilen mindestens einer ionischen Flüssigkeit, sowie
d) 0 bis 10 Gew.-Teilen, bevorzugt 0,01 bis 5 Gew.-%, besonders bevorzugt 0,02 bis 3 Gew.-Teilen mindestens eines ein-, zwei-, drei- und/oder vierwertigen Metallsalzes, insbesondere mindestens eines Alkali- oder Erdalkalihalogenids oder -pseudohalogenids,
wobei sich die Gewichtsteile der Bestandteile a) bis d) zu 100 Gew.-Teilen addieren.

8. Polymerzusammensetzung nach einem der vorhergehenden Ansprüche, **dadurch gekennzeichnet, dass** sie zusätzlich zu den Bestandteilen a) bis c) mindestens ein Zusatzstoff, ausgewählt aus der Gruppe bestehend aus UV-Absorbern, der Lichtstabilisatoren, der Stabilisatoren, der Hydroxylamine, der Benzofuranone, der Metalldesaktivatoren, der Füllstoffdesaktivatoren, der Nukleierungsmitteln, Schlagzähigkeitsverbesserern, Flammschutzmittel, Weichmachern, Gleitmitteln, Rheologiemodifikatoren, Verarbeitungshilfsmitteln, Entformungshilfsmitteln, Pigmenten, Farbstoffen, optische Aufhellern, antimikrobiellen Wirkstoffen, Antistatika, Slipmitteln, Antiblockmitteln, Kopplungsmitteln, Kettenverlängerern, Dispergiermitteln, Kompatibilisatoren, Sauerstofffängern, Säurefängern, Markierungsmitteln, Antifoggingmitteln, Füll/Verstärkungsstoffe, Kettenverlängerer sowie Mischung und Kombinationen aus mindestens zwei der zuvor genannten Zusatzstoffen enthält oder hieraus besteht.

9. Additivzusammensetzung zur Kristallisationsverzögerung und/oder zur Erniedrigung des Kristallisationspunktes von kristallisationsfähigen thermo-plastischen Polymeren oder Polymerzusammensetzungen, bestehend aus oder enthaltend
a) mindestens einem Azinfarbstoff sowie
b) mindestens einer ionischen Flüssigkeit.

10. Additivzusammensetzung nach vorhergehendem Anspruch, **dadurch gekennzeichnet, dass**
a) der mindestens eine Azinfarbstoff ausgewählt ist aus der Gruppe bestehend aus Phenazin-Farbstoffen, Oxazin-Farbstoffen, Thiazin-Farbstoffen und/oder Bisazin-Farbstoffen, insbesondere ausgewählt ist aus der Gruppe bestehend aus Nigrosinen und/oder Indulinen, und/oder
b) die mindestens eine ionische Flüssigkeit ausgewählt ist aus der Gruppe bestehend Verbindungen aus einem organischen Kation und einem organischen oder anorganischen Anion mit einem Schmelzpunkt bei Normaldruck von kleiner 150 °C, wobei
das organische Kation bevorzugt ausgewählt ist aus der Gruppe bestehend aus Methyltri-(1-butyl)ammonium, 2-Hydroxyethylammonium, 1-Methyl-imidazolium, 1-Ethylimidazolium, 1-(1-Butyl)imidazolium, 1-(1-Octyl)-imidazolium, 1-(1-Dodecyl)imidazolium, 1-(1-Tetradecyl)imidazolium, 1-(1-Hexadecyl)imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methylimidazolium, 1-(1-Hexyl)-3-ethylimidazolium, 1-(1-Hexyl)-3-butylimidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methyl-imidazolium, 1-(1-Hexadecyl)-3-ethylimidazolium, 1-(1-Hexadecyl)-3-butyl-imidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethylimidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium, Ethyltributylphosphonium, Tetrabutylphosphonium, Tetraoctylphosphonium, Tributylmethylphosphonium, Tributyltetradecylphosphonium, TrihexylTetradecylphosphonium, 1-Butyl-1-methylpiperidinium oder 1-Methyl-1-propylpiperidinium,
und das organische oder anorganische Anion bevorzugt ausgewählt ist aus der Gruppe bestehend aus Chlorid, Bromid, Hydrogensulfat, Tetrachloroaluminat, Thiocyanat, Methylsulfat, Ethylsulfat, Methansulfonat, Format, Acetat, Dimethylphosphat, Diethylphosphat, p-Toluolsulfonat,Tetrafluoroborat, Hexafluorophosphat, Bis(trifluoromethylsulfonyl)imid oder bis(2,4,4-trimethylpentyl)phosphinat,
wobei die ionische Flüssigkeit insbesondere ausgewählt ist aus der Gruppe bestehend aus 1-Ethyl-3-methylimidazolium, Trihexyltetradecylphosphonium oder 1-Methyl-1-propylpiperidinium als Kation und Chlorid, Bis(trifluormethylsulfonyl)imid oder Bis(2,4,4-trimethylpentyl)phosphinat als Anion und/oder das mindestens eine ein-, zwei-, drei- und/oder vierwertige Metallsalz ausgewählt ist aus der Gruppe bestehend aus Alkalimetallsalzen, Erdalkalimetallsalzen sowie Übergangsmetallsalzen, bevorzugt Alkalihalogeniden oder-pseudohalogeniden, Erdalkalimetallhalogeniden oder-pseudohalogeniden sowie Übergangsmetallhalogeniden oder -pseudohalogeniden, insbesondere Lithiumchlorid, Lithiumbromid, Lithiumbenzoat, Magnesiumchlorid, Calciumchlorid und/oder Zinkchlorid.

11. Additivzusammensetzung nach einem der Ansprüche 9 bis 10, **dadurch gekennzeichnet, dass** zusätzlich mindestens ein ein-, zwei-, drei- und/oder vierwertige Metallsalz ausgewählt aus der Gruppe bestehend aus Alkalimetallsalzen, Erdalkalimetallsalzen sowie Übergangsmetallsalzen, enthalten ist oder die Additivzusammensetzung hieraus besteht.

12. Additivzusammensetzung nach einem der Ansprüche 9 bis 11, **dadurch gekennzeichnet, dass** das Gewichtsverhältnis der Gesamtheit des mindestens einen Azinfarbstoffes und/oder des mindestens einen ein-, zwei-, drei- oder vierwertigen Metallsalzes zur mindestens einen ionischen Flüssigkeit von 1:99 bis 99:1, bevorzugt von 10:90 bis 90:10, weiter bevorzugt von 80:20 bis 20:80 beträgt.

13. Verfahren zur Kristallisationsverzögerung und/oder zur Erniedrigung des Kristallisationspunktes eines kristallisationsfähigen thermoplastischen Polymeren, bei dem eine Additivzusammensetzung nach einem der Ansprüche 9 bis 12 in eine Polymermatrix, enthaltend oder bestehend aus mindestens einem kristallisationsfähigem thermoplastischen Polymeren zugegeben wird, die Polymermatrix in die Schmelze überführt und anschließend abgekühlt wird oder die Additivzusammensetzung nach einem der Ansprüche 9 bis 12 in eine in schmelzflüssigem Zustand befindliche Polymermatrix, enthaltend oder bestehend aus mindestens einem kristallisationsfähigem thermoplastischen Polymeren eingearbeitet und anschließend abgekühlt wird.

14. Verfahren nach vorhergehendem Anspruch, **dadurch gekennzeichnet, dass** die Additivzusammensetzung in Form eines Masterbatches oder Konzentrates eingebracht wird, wobei der Masterbatch bevorzugt 40 bis 90 Gew.-% der Additivzusammensetzung, dispergiert in mindestens einem thermoplastischen Polymeren, enthält.

15. Verwendung einer Additivzusammensetzung nach einem der Ansprüche 9 bis 12 zur Kristallisationsverzögerung und/oder zur Erniedrigung des Kristallisationspunktes von kristallisationsfähigen thermoplastischen Polymeren.

## Claims

1. Polymer composition, comprising or consisting of
a) a matrix made of at least one crystallisable, thermoplastic polymer,
b) at least one azine dye, and also
c) at least one ionic liquid.

2. Polymer composition according to claim 1, **characterised in that** the at least one azine dye is selected from the group consisting of phenazine dyes, oxazine dyes, thiazine dyes and/or bisazine dyes, in particular is selected from the group consisting of nigrosines and/or indulines.

3. Polymer composition according to one of the preceding claims, **characterised in that** the at least one ionic liquid is selected from the group consisting of compounds made of an organic cation and an organic or inorganic anion with a melting point at normal pressure of less than 150°C,
the organic cation preferably being selected from the group consisting of methyltri(1-butyl)ammonium, 2-hydroxyethylammonium, 1-methylimidazolium, 1-ethylimidazolium, 1-(1-butyl)imidazolium, 1-(1-octyl)imidazolium, 1-(1-dodecyl)imidazolium, 1-(1-tetradecyl)imidazolium, 1-(1-hexadecyl)imidazolium, 1,3-dimethylimidazolium, 1-ethyl-3-methylimidazolium, 1-(1-butyl)-3-methylimidazolium, 1-(1-butyl)-3-ethylimidazolium, 1-(1-hexyl)-3-methylimidazolium, 1-(1-hexyl)-3-ethylimidazolium, 1-(1-hexyl)-3-butylimidazolium, 1-(1-octyl)-3-methylimidazolium, 1-(1-octyl)-3-ethylimidazolium, 1-(1-octyl)-3-butylimidazolium, 1-(1-dodecyl)-3-methylimidazolium, 1-(1-dodecyl)-3-ethylimidazolium, 1-(1-dodecyl)-3-butylimidazolium, 1-(1-dodecyl)-3-octylimidazolium, 1-(1-tetradecyl)-3-methylimidazolium, 1-(1-tetradecyl)-3-ethylimidazolium, 1-(1-tetradecyl)-3-butylimidazolium, 1-(1-tetradecyl)-3-octylimidazolium, 1-(1-hexadecyl)-3-methylimidazolium, 1-(1-hexadecyl)-3-ethylimidazolium, 1-(1-hexadecyl)-3-butylimidazolium, 1-(1-hexadecyl)-3-octylimidazolium, 1,2-dimethylimidazolium, 1,2,3-trimethylimidazolium, 1-ethyl-2,3-dimethylimidazolium, 1-(1-butyl)-2,3-dimethylimidazolium, 1-(1-hexyl)-2,3-dimethylimidazolium, 1-(1-octyl)-2,3-dimethylimidazolium, 1,4-dimethylimidazolium, 1,3,4-trimethylimidazolium, 1,4-dimethyl-3-ethylimidazolium, 3-butylimidazolium, 1,4-dimethyl-3-octylimidazolium, 1,4,5-trimethylimidazolium, 1,3,4,5-tetramethylimidazolium, 1,4,5-trimethyl-3-ethylimidazolium, 1,4,5-trimethyl-3-butylimidazolium, 1,4,5-trimethyl-3-octylimidazolium, ethyltributylphosphonium, tetrabutylphosphonium, tetraoctylphosphonium, tributylmethylphosphonium, tributyltetradecylphosphonium, trihexyltetradecylphosphonium, 1-butyl-1-methylpiperidinium or 1-methyl-1-propylpiperidinium,
and the organic or inorganic anion being preferably selected from the group consisting of chloride, bromide, hydrogen sulphate, tetrachloroaluminate, thiocyanate, methylsulphate, ethylsulphate, methane sulphonate, formiate, acetate, dimethylphosphate, diethylphosphate, p-toluene sulphonate, tetrafluoroborate, hexafluorophosphate, bis(trifluoromethylsulphonyl)imide or bis(2,4,4-trimethylpentyl) phosphinate,
the ionic liquid in particular being selected from the group consisting of 1-ethyl-3-methylimidazolium, trihexyltetradecylphosphonium or 1-methyl-1-propylpiperidinium as cation, and chloride, hexafluorophosphate, bis(trifluoromethylsulphonyl)imide or bis(2,4,4-trimethylpentyl)phosphinate as anion.

4. Polymer composition according to one of the preceding claims, **characterised in that**, in addition, at least one mono-, bi-, tri- and/or tetravalent metal salt, selected from the group consisting of alkali metal salts, alkaline earth metal salts and also transition metal salts, is contained, or the polymer composition consists of the mentioned components, wherein preferably
the at least one mono-, bi-, tri- and/or tetravalent metal salt is selected from the group consisting of alkali metal halogenides or - pseudohalogenides, alkaline earth metal halogenides or - pseudohalogenides and also transition metal halogenides or - pseudohalogenides, in particular lithium chloride, lithium bromide, lithium benzoate, magnesium chloride, calcium chloride and/or zinc chloride.

5. Polymer composition according to one of the preceding claims, **characterised in that** the weight ratio of the totality of the at least one azine dye and of the possibly present at least one mono-, bi-, tri- and/or tetravalent metal salt to the at least one ionic liquid is of 1 : 99 to 99 : 1, preferably of 10 : 90 to 90 : 10, further preferably of 80 : 20 to 20 : 80.

6. Polymer composition according to the preceding claim, **characterised in that** the at least one crystallisable, thermoplastic polymer of the polymer matrix is selected from the group consisting of
a) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides, e.g. produced from terephthalic acid and/or isophthalic acid and aliphatic diamines or from aliphatic dicarboxylic acids, such as e.g. adipic acid or sebacic acid and aromatic diamines, such as e.g. 1,4- or 1,3-diaminobenzene, and also blends of various polyamides, in particular of PA-6 and PA-6.6,
b) polymers made of olefins or diolefins, such as e.g. polyethylene (LDPE, LLDPE, VLDPE, ULDPE, MDPE, HDPE, UHMWPE), metallocene-PE (m-PE), polypropylene,
c) polyacetals, such as e.g. polyoxymethylene (POM) or POM copolymers with e.g. butanal,
d) polyphenylene oxides and blends with polystyrene or polyamides,
e) polyimides, polyamideimides, polyetherimides, polyesterimides, poly(ether)ketones, polyarylsulphones, polyphenylensulphide, polybenzimidazoles, polyhydantoins,
f) polyesters made of aliphatic or aromatic dicarboxylic acids or diols or made of hydroxycarboxylic acids, such as e.g. polyethylene terephthalate (PET), polybutylene terephthalate (PBT), polypropylene terephthalate (PPT), polyethylene naphthylate, poly-1,4-dimethylolcyclohexane terephthalate, polyhydroxybenzoate, polyhydroxynaphthylate, polylactic acid (PLA), polyhydroxybutyrate (PHB), polyhydroxyvalerate (PHV),
g) and also mixtures, combinations or blends of two or more of the previously mentioned polymers, such as e.g. polyamide 6/6.6, polyamide/polypropylene, PBT/PET,
wherein especially
the polymer matrix consists of a polymer, selected from the group consisting of polyamides and polyesters, in particular polyamide 6, polyamide 66, polyethylene terephthalate, polybutylene terephthalate and polylactic acid.

7. Polymer composition according to one of the preceding claims, comprising or consisting of
a) 99.98 to 70 parts by weight, preferably 99.97 to 80 parts by weight, particularly preferably 99.94 to 91 parts by weight, of a matrix made of at least one polyamide or polyester,
b) 0.01 to 10 parts by weight, preferably 0.01 to 7.5 parts by weight, particularly preferably 0.02 to 3 parts by weight, of at least one nigrosine,
c) 0.01 to 10 parts by weight, preferably 0.01 to 7.5 parts by weight, particularly preferably 0.02 to 3 parts by weight, of at least one ionic liquid, and also
d) 0 to 10 parts by weight, preferably 0.01 to 5% by weight, particularly preferably 0.02 to 3 parts by weight, of at least one alkali- or alkaline earth halogenide or -pseudohalogenide,
the parts by weight of components a) to d) adding up to 100 parts by weight.

8. Polymer composition according to one of the preceding claims, **characterised in that** it comprises, in addition to components a) to c), at least one additive, selected from the group consisting of UV absorbers, light stabilisers, stabilisers, hydroxylamines, benzofuranones, metal deactivators, filler deactivators, nucleation agents, impact strength enhancers, flame retardants, plasticisers, lubricants, rheology modifiers, processing aids, mould-release agents, pigments, colourants, optical brighteners, antimicrobial active substances, antistatic agents, slip agents, antiblocking agents, coupling means, chain extenders, dispersants, compatibilisers, oxygen collectors, acid collectors, marking means, anti-fogging means, fillers/reinforcing materials, chain extenders and also mixtures and combinations of at least two of the previously mentioned additives or consists hereof.

9. Additive composition for crystallisation delay and/or for lowering the crystallisation point of crystallisable, thermoplastic polymers or polymer compositions, consisting of or comprising
a) at least one azine dye and
b) at least one ionic liquid.

10. Additive composition according to the preceding claim, **characterised in that**
a) the at least one azine dye is selected from the group consisting of phenazine dyes, oxazine dyes, thiazine dyes and/or bisazine dyes, in particular is selected from the group consisting of nigrosines and/or indulines, and/or
b) the at least one ionic liquid is selected from the group consisting of compounds made of an organic cation and an organic or inorganic anion with a melting point at normal pressure of less than 150°C,
the organic cation preferably being selected from the group consisting of methyltri(1-butyl)ammonium, 2-hydroxyethylammonium, 1-methylimidazolium, 1-ethylimidazolium, 1-(1-butyl)imidazolium, 1-(1-octyl)imidazolium, 1-(1-dodecyl)imidazolium, 1-(1-tetradecyl)imidazolium, 1-(1-hexadecyl)imidazolium, 1,3-dimethylimidazolium, 1-ethyl-3-methylimidazolium, 1-(1-butyl)-3-methylimidazolium, 1-(1-butyl)-3-ethylimidazolium, 1-(1-hexyl)-3-methylimidazolium, 1-(1-hexyl)-3-ethylimidazolium, 1-(1-hexyl)-3-butylimidazolium, 1-(1-octyl)-3-methylimidazolium, 1-(1-octyl)-3-ethylimidazolium, 1-(1-octyl)-3-butylimidazolium, 1-(1-dodecyl)-3-methylimidazolium, 1-(1-dodecyl)-3-ethylimidazolium, 1-(1-dodecyl)-3-butylimidazolium, 1-(1-dodecyl)-3-octylimidazolium, 1-(1-tetradecyl)-3-methylimidazolium, 1-(1-tetradecyl)-3-ethylimidazolium, 1-(1-tetradecyl)-3-butylimidazolium, 1-(1-tetradecyl)-3-octyl-imidazolium, 1-(1-hexadecyl)-3-methylimidazolium, 1-(1-hexadecyl)-3-ethylimidazolium, 1-(1-hexadecyl)-3-butylimidazolium, 1-(1-hexadecyl)-3-octylimidazolium, 1,2-dimethylimidazolium, 1,2,3-trimethylimidazolium, 1-ethyl-2,3-dimethylimidazolium, 1-(1-butyl)-2,3-dimethylimidazolium, 1-(1-hexyl)-2,3-dimethylimidazolium, 1-(1-octyl)-2,3-dimethylimidazolium, 1,4-dimethylimidazolium, 1,3,4-trimethylimidazolium, 1,4-dimethyl-3-ethylimidazolium, 3-butylimidazolium, 1,4-dimethyl-3-octylimidazolium, 1,4,5-trimethylimidazolium, 1,3,4,5-tetramethylimidazolium, 1,4,5-trimethyl-3-ethylimidazolium, 1,4,5-trimethyl-3-butylimidazolium, 1,4,5-trimethyl-3-octylimidazolium, ethyltributylphosphonium, tetrabutylphosphonium, tetraoctylphosphonium, tributylmethylphosphonium, tributyltetradecylphosphonium, trihexyltetradecylphosphonium, 1-butyl-1-methylpiperidinium or 1-methyl-1-propylpiperidinium,
and the organic or inorganic anion preferably being selected from the group consisting of chloride, bromide, hydrogen sulphate, tetrachloroaluminate, thiocyanate, methylsulphate, ethylsulphate, methane sulphonate, formiate, acetate, dimethylphosphate, diethylphosphate, p-toluene sulphonate, tetrafluoroborate, hexafluorophosphate, bis(trifluoromethylsulphonyl)imide or bis(2,4,4-trimethylpentyl)phosphinate,
the ionic liquid in particular being selected from the group consisting of 1-ethyl-3-methylimidazolium, trihexyltetradecylphosphonium or 1-methyl-1-propylpiperidinium as cation, and chloride, bis(trifluoromethylsulphonyl)imide or bis(2,4,4-trimethylpentyl)phosphinate as anion and/or
the at least one mono-, bi-, tri- and/or tetravalent metal salt being selected from the group consisting of alkali metal salts, alkaline earth metal salts and also transition metal salts, preferably alkali halogenides or -pseudohalogenides, alkaline earth metal halogenides or -pseudohalogenides and also transition metal halogenides or -pseudohalogenides, in particular lithium chloride, lithium bromide, lithium benzoate, magnesium chloride, calcium chloride and/or zinc chloride.

11. Additive composition according to one of the claims 9 to 10, **characterised in that**, in addition, at least one mono-, bi-, tri- and/or tetravalent metal salt, selected from the group consisting of alkali metal salts, alkaline earth metal salts and also transition metal salts, is contained, or the additive composition consists hereof.

12. Additive composition according to one of the claims 9 to 11, **characterised in that** the weight ratio of the totality of the at least one azine dye and/or of the at least one mono-, bi-, tri- or tetravalent metal salt to the at least one ionic liquid is of 1 : 99 to 99 : 1, preferably of 10 : 90 to 90 : 10, further preferably of 80 : 20 to 20 : 80.

13. Method for crystallisation delay and/or for lowering the crystallisation point of a crystallisable, thermoplastic polymer, in which an additive composition according to one of the claims 9 to 12 is added into a polymer matrix, comprising or consisting of at least one crystallisable, thermoplastic polymer, the polymer matrix is transferred into the melt and subsequently cooled, or the additive composition according to one of the claims 12 to 15 is incorporated into a polymer matrix in the molten state, comprising or consisting of at least one crystallisable, thermoplastic polymer, and subsequently cooled.

14. Method according to the preceding claim, **characterised in that** the additive composition is introduced in the form of a master batch or concentrate, the master batch comprising preferably 40 to 90% by weight of the additive composition, dispersed in at least one thermoplastic polymer.

15. Use of an additive composition according to one of the claims 9 to 12 for crystallisation delay and/or for lowering the crystallisation point of crystallisable, thermoplastic polymers.

## Revendications

1. Composition de polymères, contenant
a) une matrice d'au moins un polymère thermoplastique cristallisable,
b) au moins un colorant d'azine, ainsi que
c) au moins un liquide ionique,
ou en étant constituée.

2. Composition de polymères selon la revendication 1, **caractérisée en ce que** l'au moins un colorant d'azine est choisi dans le groupe consistant en les colorants de phénazine, les colorants d'oxazine, les colorants de thiazine et/ou les colorants de bisazine, en particulier choisi dans le groupe consistant en les nigrosines et/ou les indulines.

3. Composition de polymères selon l'une des revendications précédentes, **caractérisée en ce que** l'au moins un liquide ionique est choisi dans le groupe consistant en les composés d'un cation organique et d'un anion organique ou inorganique ayant un point de fusion sous la pression normale inférieur à 150 °C, dans laquelle
le cation organique est de préférence choisi dans le groupe consistant en le méthyltri(1-butyl)ammonium, le 2-hydroxyéthylammonium, le 1-méthylimidazolium, le 1-éthylimidazolium, le 1-(1-butyl)imidazolium, le 1-(1-octyl)imidazolium, le 1-(1-dodécyl)imidazolium, le 1-(1-tétradécyl)imidazolium, le 1-(1-hexadécyl)imidazolium, le 1,3-diméthylimidazolium, le 1-éthyl-3-méthylimidazolium, le 1-(1-butyl)-3-méthylimidazolium, le 1-(1-butyl)-3-éthylimidazolium, le 1-(1-hexyl)-3-méthylimidazolium, le 1-(1-hexyl)-3-éthylimidazolium, le 1-(1-hexyl)-3-butylimidazolium, le 1-(1-octyl)-3-méthylimidazolium, le 1-(1-octyl)-3-éthylimidazolium, le 1-(1-octyl)-3-butylimidazolium, le 1-(1-dodécyl)-3-méthylimidazolium, le 1-(1-dodécyl)-3-éthylimidazolium, le 1-(1-dodécyl)-3-butylimidazolium, le 1-(1-dodécyl)-3-octylimidazolium, le 1-(1-tétradécyl)-3-méthylimidazolium, le 1-(1-tétradécyl)-3-éthylimidazolium, le 1-(1-tétradécyl)-3-butylimidazolium, le 1-(1-tétradécyl)-3-octylimidazolium, le 1-(1-hexadécyl)-3-méthylimidazolium, le 1-(1-hexadécyl)-3-éthylimidazolium, le 1-(1-hexadécyl)-3-butylimidazolium, le 1-(1-hexadécyl)-3-octylimidazolium, le 1,2-diméthylimidazolium, le 1,2,3-triméthylimidazolium, le 1-éthyl-2,3-diméthylimidazolium, le 1-(1-butyl)-2,3-diméthylimidazolium, le 1-(1-hexyl)-2,3-diméthylimidazolium, le 1-(1-octyl)-2,3-diméthylimidazolium, le 1,4-diméthylimidazolium, le 1,3,4-triméthylimidazolium, le 1,4-diméthyl-3-éthylimidazolium, le 3-butylimidazolium, le 1,4-diméthyl-3-octylimidazolium, le 1,4,5-triméthylimidazolium, le 1,3,4,5-tétraméthylimidazolium, le 1,4,5-triméthyl-3-éthylimidazolium, le 1,4,5-triméthyl-3-butylimidazolium, le 1,4,5-triméthyl-3-octylimidazolium, l'éthyltributylphosphonium, le tétrabutylphosphonium, le tétraoctylphosphonium, le tributylméthylphosphonium, le tributyltétradécylphosphonium, le trihexyltétradécylphosphonium, le 1-butyl-1-méthylpipéridinium ou le 1-méthyl-1-propylpipéridinium,
et l'anion organique ou inorganique est de préférence choisi dans le groupe consistant en le chlorure, le bromure, l'hydrogénosulfate, le tétrachloroaluminate, le thiocyanate, le méthylsulfate, l'éthylsulfate, le méthanesulfonate, le formiate, l'acétate, le diméthylphosphate, le diéthylphosphate, le p-toluènesulfonate, le tétrafluoroborate, l'hexafluorophosphate, le bis(trifluorométhylsulfonyl)-imide ou le bis(2,4,4-triméthylpentyl)phosphinate,
dans laquelle le liquide ionique est choisi en particulier dans le groupe consistant en le 1-éthyl-3-méthylimidazolium, le trihexyltétradécylphosphonium ou le 1-méthyl-1-propylpipéridinium en tant que cation, et le chlorure, l'hexafluorophosphate, le bis(trifluorométhylsulfonyl)imide ou le bis(2,4,4-triméthylpentyl)phosphinate en tant qu'anion.

4. Composition de polymères selon l'une des revendications précédentes, **caractérisée en ce qu'**il contient en outre au moins un sel d'un métal monovalent, divalent, trivalent et/ou tétravalent, choisi dans le groupe consistant en les sels de métaux alcalins, les sels de métaux alcalino-terreux, ainsi que les sels de métaux de transition, ou
la composition de polymères est constituée des composants mentionnés,
de préférence l'au moins un sel d'un métal monovalent, divalent, trivalent et/ou tétravalent étant choisi dans le groupe consistant en les halogénures ou pseudohalogénures de métaux alcalins, les halogénures ou pseudohalogénures de métaux alcalino-terreux, ainsi que les halogénures ou pseudohalogénures de métaux de transition, en particulier le chlorure de lithium, le bromure de lithium, le benzoate de lithium, le chlorure de magnésium, le chlorure de calcium et/ou le chlorure de zinc.

5. Composition de polymères selon l'une des revendications précédentes, **caractérisée en ce que** le rapport en poids entre la somme de l'au moins un colorant d'azine et de l'au moins un sel d'un métal monovalent, divalent, trivalent et/ou tétravalent éventuellement présent, et l'au moins un liquide ionique, est de 1:99 à 99:1, de préférence de 10:90 à 90:10, plus préférentiellement de 80:20 à 20:80.

6. Composition de polymères selon la revendication précédente, **caractérisée en ce que** l'au moins un polymère thermoplastique cristallisable de la matrice de polymères est choisi dans le groupe consistant en
a) les polyamides, tels que par exemple le polyamide-6, 6.6, 6.10, 4.6, 4.10, 6.12, 12.12, le polyamide 11, le polyamide 12, ainsi que les polyamides (partiellement) aromatiques tels que par exemple le polyphtalamide, par exemple préparé à partir d'acide téréphtalique et/ou d'acide isophtalique et de diamines aliphatiques, ou d'acides dicarboxyliques aliphatiques tels que par exemple l'acide adipique, ou d'acide sébacique et de diamines aromatiques telles que par exemple le 1,4- ou le 1,3-diaminobenzène, ainsi que les mélanges de différents polyamides, en particulier de PA-6 et de PA-6.6,
b) les polymères d'oléfines ou de dioléfines, tels que par exemple le polyéthylène (PEBD, PEBDL, VLDPE, ULDPE, MDPE, PEHD, UHMWPE), le métallocène-PE (m-PE), le polypropylène,
c) les polyacétals, tels que par exemple le polyoxyméthylène (POM) ou les copolymères de POM avec par exemple le butanal,
d) les poly(oxydes de phénylène) et leurs mélanges avec le polystyrène ou les polyamides,
e) les polyimides, les polyamide-imides, les polyétherimides, les polyesterimides, les poly(éther)cétones, les polyarylsulfones, le poly(sulfure de phénylène), les polybenzimidazoles, les polyhydantoïnes,
f) les polyesters de diols ou d'acides dicarboxyliques aliphatiques ou aromatiques, ou d'acides hydroxycarboxyliques tels que par exemple le poly(téréphtalate d'éthylène) (PET), le poly(téréphtalate de butylène) (PBT), le poly(téréphtalate de propylène) (PPT), le poly(naphtylate d'éthylène), le poly(cyclohexanetéréphtalate de 1,4-diméthylol), le polyhydroxybenzoate, le polyhydroxynaphtylate, le poly(acide lactique) (PLA), le polyhydroxybutyrate (PHB), le polyhydroxyvalérate (PHV),
g) ainsi que le mélanges, combinaisons ou mélanges mécaniques de deux des polymères mentionnés ci-dessus, ou plus, comme par exemple le polyamide 6/6.6, le polyamide/polypropylène, le PBT/PET,
dans laquelle
la matrice de polymères est constituée en particulier d'un polymère choisi dans le groupe consistant en les polyamides et les polyesters, en particulier le polyamide 6, le polyamide 66, le poly(téréphtalate d'éthylène), le poly(téréphtalate de butylène) et le poly(acide lactique).

7. Composition de polymères selon l'une des revendications précédentes, contenant
a) 99,98 à 70 parties en poids, de préférence 99,97 à 80 parties en poids, d'une manière particulièrement préférée 99,94 à 91 parties en poids d'une matrice constituée d'au moins un polymère thermoplastique cristallisable, en particulier d'au moins un polyamide ou d'un polyester,
b) 0,01 à 10 parties en poids, de préférence 0,01 à 7,5 parties en poids, d'une manière particulièrement préférée 0,02 à 3 parties en poids d'au moins un colorant d'azine, en particulier d'au moins un nigrosine,
c) 0,01 à 10 parties en poids, de préférence 0,01 à 7,5 parties en poids, d'une manière particulièrement préférée 0,02 à 3 parties en poids d'au moins un liquide ionique, ainsi que
d) 0 à 10 parties en poids, de préférence 0,01 à 5 % en poids, d'une manière particulièrement préférée 0,02 à 3 parties en poids d'au moins un sel d'un métal monovalent, divalent, trivalent et/ou tétravalent, en particulier d'au moins un halogénure ou d'un pseudohalogénure d'un métal alcalin ou d'un métal alcalino-terreux,
ou en étant constituée,
les parties en poids des constituants a) à d) s'additionnant pour former 100 parties en poids.

8. Composition de polymères selon l'une des revendications précédentes, **caractérisée en ce que**, en plus des constituants a) à c), elle contient au moins un additif choisi dans le groupe consistant en les absorbants UV, les photostabilisants, les stabilisants, les hydroxylamines, les benzofurannones, les désactivateurs de métaux, les désactivateurs de charges, les agents de nucléation, les agents améliorant la résistance au choc, les agents retardateurs de flamme, les plastifiants, les lubrifiants, les agents modifiant la rhéologie, les auxiliaires de mise en oeuvre, les auxiliaires de démoulage, les pigments, les colorants, les azurants optiques, les matières actives antimicrobiennes, les antistatiques, les agents de glissement, les agents anti-adhérence de contact, les agents de copulation, les prolongateurs de chaîne, les dispersants, les agents de compatibilisation, les fixateurs d'oxygène, les fixateurs d'acide, les agents de marquage, les agents anti-voile, les matières de charge/de renfort, les prolongateurs de chaîne, ainsi qu'un mélange et des combinaisons d'au moins deux des additifs mentionnés ci-dessus, ou en est constituée.

9. Composition d'additifs pour retarder la cristallisation et/ou pour abaisser le point de cristallisation de polymères ou de compositions de polymères thermoplastiques cristallisables, consistant en
a) au moins un colorant d'azine, ainsi que
b) au moins un liquide ionique, ou les contenant.

10. Composition d'additifs selon la revendication précédente, **caractérisée en ce que**
a) l'au moins un colorant d'azine est choisi dans le groupe consistant en les colorants de phénazine, les colorants d'oxazine, les colorants de thiazine et/ou les colorants de bisazine, en particulier choisi dans le groupe consistant en les nigrosines et/ou les indulines, et/ou
b) l'au moins un liquide ionique est choisi dans le groupe consistant en les composés d'un cation organique et d'un anion organique ou inorganique ayant un point de fusion sous la pression normale inférieur à 150 °C, dans laquelle
le cation organique est de préférence choisi dans le groupe consistant en le méthyltri(1-butyl)ammonium, le 2-hydroxyéthylammonium, le 1-méthylimidazolium, le 1-éthylimidazolium, le 1-(1-butyl)imidazolium, le 1-(1-octyl)imidazolium, le 1-(1-dodécyl)imidazolium, le 1-(1-tétradécyl)imidazolium, le 1-(1-hexadécyl)imidazolium, le 1,3-diméthylimidazolium, le 1-éthyl-3-méthylimidazolium, le 1-(1-butyl)-3-méthylimidazolium, le 1-(1-butyl)-3-éthylimidazolium, le 1-(1-hexyl)-3-méthylimidazolium, le 1-(1-hexyl)-3-éthylimidazolium, le 1-(1-hexyl)-3-butylimidazolium, le 1-(1-octyl)-3-méthylimidazolium, le 1-(1-octyl)-3-éthylimidazolium, le 1-(1-octyl)-3-butylimidazolium, le 1-(1-dodécyl)-3-méthylimidazolium, le 1-(1-dodécyl)-3-éthylimidazolium, le 1-(1-dodécyl)-3-butylimidazolium, le 1-(1-dodécyl)-3-octylimidazolium, le 1-(1-tétradécyl)-3-méthylimidazolium, le 1-(1-tétradécyl)-3-éthylimidazolium, le 1-(1-tétradécyl)-3-butylimidazolium, le 1-(1-tétradécyl)-3-octylimidazolium, le 1-(1-hexadécyl)-3-méthylimidazolium, le 1-(1-hexadécyl)-3-éthylimidazolium, le 1-(1-hexadécyl)-3-butylimidazolium, le 1-(1-hexadécyl)-3-octylimidazolium, le 1,2-diméthylimidazolium, le 1,2,3-triméthylimidazolium, le 1-éthyl-2,3-diméthylimidazolium, le 1-(1-butyl)-2,3-diméthylimidazolium, le 1-(1-hexyl)-2,3-diméthylimidazolium, le 1-(1-octyl)-2,3-diméthylimidazolium, le 1,4-diméthylimidazolium, le 1,3,4-triméthylimidazolium, le 1,4-diméthyl-3-éthylimidazolium, le 3-butylimidazolium, le 1,4-diméthyl-3-octylimidazolium, le 1,4,5-triméthylimidazolium, le 1,3,4,5-tétraméthylimidazolium, le 1,4,5-triméthyl-3-éthylimidazolium, le 1,4,5-triméthyl-3-butylimidazolium, le 1,4,5-triméthyl-3-octylimidazolium, l'éthyltributylphosphonium, le tétrabutylphosphonium, le tétraoctylphosphonium, le tributylméthylphosphonium, le tributyltétradécylphosphonium, le trihexyltétradécylphosphonium, le 1-butyl-1-méthylpipéridinium ou le 1-méthyl-1-propylpipéridinium,
et l'anion organique ou inorganique est de préférence choisi dans le groupe consistant en le chlorure, le bromure, l'hydrogénosulfate, le tétrachloroaluminate, le thiocyanate, le méthylsulfate, l'éthylsulfate, le méthanesulfonate, le formiate, l'acétate, le diméthylphosphate, le diéthylphosphate, le p-toluènesulfonate, le tétrafluoroborate, l'hexafluorophosphate, le bis(trifluorométhylsulfonyl)-imide ou le bis(2,4,4-triméthylpentyl)phosphinate,
dans laquelle le liquide ionique est choisi en particulier dans le groupe consistant en le 1-éthyl-3-méthylimidazolium, le trihexyltétradécylphosphonium ou le 1-méthyl-1-propylpipéridinium en tant que cation, et le chlorure, le bis(trifluorométhylsulfonyl)imide ou le bis(2,4,4-triméthylpentyl)phosphinate en tant qu'anion et/ou
l'au moins un sel d'un métal monovalent, divalent, trivalent et/ou tétravalent est choisi dans le groupe consistant en les sels de métaux alcalins, les sels de métaux alcalino-terreux ainsi que les sels de métaux de transition, de préférence les halogénures ou pseudohalogénures de métaux alcalins, les halogénures ou pseudohalogénures de métaux alcalino-terreux, ainsi que les halogénures ou pseudohalogénures de métaux de transition, en particulier le chlorure de lithium, le bromure de lithium, le benzoate de lithium, le chlorure de magnésium, le chlorure de calcium et/ou le chlorure de zinc.

11. Composition d'additifs selon l'une des revendications 9 à 10, **caractérisée en ce qu'**elle contient en outre au moins un sel d'un métal monovalent, divalent, trivalent et/ou tétravalent, choisi dans le groupe consistant en les sels de métaux alcalins, les sels de métaux alcalino-terreux ou les sels de métaux de transition, ou **en ce que** la composition d'additifs en est constituée.

12. Composition d'additifs selon l'une des revendications 9 à 11, **caractérisée en ce que** le rapport en poids entre la somme de l'au moins un colorant d'azine et de l'au moins un sel d'un métal monovalent, divalent, trivalent ou tétravalent, et l'au moins un liquide ionique, est de 1:99 à 99:1, de préférence de 10:90 à 90:10, plus préférentiellement de 80:20 à 20:80.

13. Procédé pour retarder la cristallisation et/ou pour abaisser le point de cristallisation d'un polymère thermoplastique cristallisable, dans lequel on introduit une composition d'additifs selon l'une des revendications 9 à 12 dans une matrice de polymères contenant au moins un polymère thermoplastique cristallisable ou en étant constituée, on transfère la matrice de polymères dans la masse fondue puis on la refroidit, ou on incorpore la composition d'additifs selon l'une des revendications 9 à 12 dans une matrice de polymères se trouvant à l'état fondu, contenant au moins un polymère thermoplastique cristallisable ou en étant constituée, puis on la refroidit.

14. Procédé selon la revendication précédente, **caractérisé en ce que** la composition d'additifs est introduite sous forme d'un mélange-maître ou d'un concentré, le mélange-maître contenant de préférence 40 à 90 % en poids de la composition d'additifs, en dispersion dans au moins un polymère thermoplastique.

15. Utilisation d'une composition d'additifs selon l'une des revendications 9 à 12 pour retarder la cristallisation et/ou abaisser le point de cristallisation de polymères thermoplastiques cristallisables.
